# EUROPEAN PATENT APPLICATION

(11) **EP 0 521 574 A1**
(43) Date of publication of application: **07.01.1993**
(21) Application number: 92201971.6
(22) Date of filing: 30.06.1992
(51) Int. Cl.: B29C 51/42

(54) **Method and device for manufacturing objects from a web of thermoplastic material**

(30) Priority: 04.07.1991 NL 9101164
(71) Applicant: TW PACKAGING TWENTE B.V., 7471 SB Goor (NL)
(72) Inventor: Wesselingh, Bernard Rudolf, NL-7241 LG Lochem (NL)
(74) Representative: Iemenschot, Johannes Andreas, Ir.

(57) **Abstract**

In the manufacture of objects such as lids from a web (5) of thermoplastic material a film web part (5a) is heated on both sides in first station (1) and then further heated through in a second station (2), in such a way that the film web part has the same temperature all over, which is slightly lower than the deformation temperature of the film. In a third station (3), the objects are then formed in a mould (8) from the heated film web part. In this process air under pressure at a temperature higher than the deformation temperature of the film is used as the moulding medium, by which the film web part is blown against a cold mould wall. Between the second station (2) and third station (3) the heated film web part is shielded from external temperature influences by shielding means (17). The film web (5) is supported by supporting edges (20).

## Description

The present invention relates to a method for manufacturing objects from a web of thermoplastic material, in which a film web is heated to a specific desired deformation temperature, in a cooled mould the objects are moulded through deformation of the heated film web part and are also cooled, and the moulded and cooled objects are removed from the film web part. The invention also relates to a device for carrying out this method. Such a method and device are known, for example from EP-A-O,146,700. The method and device described therein can be used in the manufacture of containers for packaging foods.

Packaging for foodstuffs must now be such that it causes little or no environmental pollution. Increasing use is therefore being made of polyalkenes as packaging materials, in particular polyethylene and polypropylene. For the packaging of paste-type foods such as margarine, containers made by deep-drawing from polypropylene film are very suitable. Keeping the wall thickness above certain lower limits after deformation ensures that the barrier properties of the container and its shape retention are adequate. The sell-by date is easy to apply to the pack by the new marking techniques.

One problem is still high-quality printing of the lid of the pack, in such a way that the usual quality of printing which could be achieved when other materials were used can be maintained. As a result of the low degree of deformation of the polypropylene film for a lid, the starting material - the film - is considerably thinner than the starting material for the remainder of the pack. The lid in this case meets the standards set, both as regards the barrier properties and as regards strength and rigidity.

The thin polypropylene film for a lid must be heated up to the (narrowly defined) desired deformation temperature, i.e. to just above glass transition temperature, following which the film is clamped along the edge of the lid to be formed, and the lid is moulded into the desired shape. The low heat content of the thin film and the low residual strength of the film when it is at deformation temperature results in an irregularity in the degree of stretch of the material during deformation if there is the slightest irregularity in heat or pressure supply and/or discharge. If film is printed before the deformation, this produces an irregular printing pattern on the end product. Printing lids afterwards limits the possibilities as regards the type and pattern of the printing in such a way that its attractiveness is unacceptably lowered compared with the existing lids of "more environmentally polluting materials".

The object of the invention in general is to provide a method and device for manufacturing objects from a web of thermoplastic material which makes it possible to manufacture objects economically from a web of film of low thickness, in which printing applied to the film web in advance goes in the correct place on the moulded object, and is in the correct form. Manufacturing economically means, inter alia, that the distance between the objects to be moulded is as small as possible, so that the quantity of waste, i.e. film material lying between the objects, is minimised.

This object is achieved according to the invention with the method described at the beginning through the fact that in a first phase the film web part is heated at both sides over its entire width, is then heated through in a subsequent, second phase, in such a way that the film web part reaches the same temperature over the entire thickness, width and length, which temperature is slightly lower than the desired deformation temperature, and thereafter, in a third phase, the objects are formed from the heated film web part in the cooled mould by means of a moulding medium under raised pressure at a temperature which lies above the deformation temperature.

Preferred embodiments of the method according to the invention are defined in Claims 2 to 6. The method according to the invention can be used with particular advantage for manufacturing thin-walled lids from a flat web of polyalkene film.

The device for carrying out the method according to the invention comprises a first station for heating a film web part situated therein, which first station is provided with heating means, a second station for heating through a film web part heated in the first station, and a third station for moulding the objects, which third station comprises a mould consisting of two mould halves which can be moved up to and away from each other, and between which a heated film web part can be placed, one mould half being provided with at least one cavity which is connected by means of a shut-off valve to a compressed air buffer in which a heating element is accommodated, while the other mould half is provided with at least one mould cavity for an object to be moulded and has a surface which faces a film web part placed in the mould and can be cooled.

Preferred embodiments of the device according to the invention are defined in Claims 10 to 16.

With the method and device according to the invention it has been found possible to manufacture thin-walled lids from a web of polypropylene film between 0.3 and 0.4 mm thick, in which the printing is produced on the film web beforehand and this printing appears at the correct position and in the correct pattern on the lids after the lids have been formed.

The invention will now be explained in the example of an embodiment which follows, with reference to the drawing, in which:
Fig. 1 shows schematically a device according to the invention;
Fig. 2 shows a detail of the mould on an enlarged scale; and
Fig. 3 shows a longitudinal section of a compressed air buffer used in the device of Fig. 1.

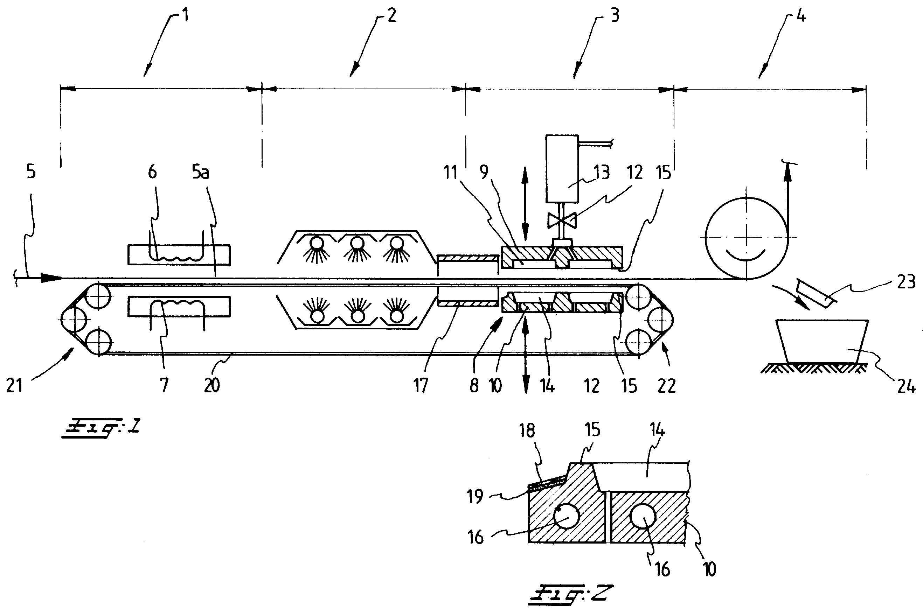

The device according to the invention shown schematically in Fig. 1 comprises four processing stations, indicated by the reference numbers 1 - 4. The film web from which the objects are manufactured is indicated by the reference number 5. During the manufacturing process the film web passes in succession through the stations 1 to 4.

In the first station 1 a film web part 5a is heated both at the top and at the bottom side over the entire width, for example by convection and/or radiation. Heating elements 6 and 7 are fitted for this purpose.

In the second station 2 following the first station 1 the film web part is heated through, in order to give the film web part the same temperature over the whole thickness, width and length, this temperature being slightly lower than the desired deformation temperature.

The third station 3 comprises a mould 8, made up of two mould halves 9 and 10. The mould halves 9 and 10 can be moved up to and away from each other. The film web 5 can move between the mould halves 9 and 10 when the mould is open. A number of cavities 11, connected by means of a shut-off valve 12 to a compressed air buffer 13, are provided at the top mould half 9. A number of mould cavities 14, of a shape which corresponds to the shape of the objects to be manufactured, are provided in the lower mould half 10. A film web part lying between the mould halves 9 and 10 when the mould is closed is clamped by clamping edges 15 situated next to the mould cavities.

In the third station 3, when the mould 8 is closed objects are formed from a heated film web part placed between the mould halves 9 and 10 by blowing warm air under raised pressure into the cavities 11. The temperature of this air lies above the deformation temperature of the film web part in the mould 8. The warm air is conveyed through the compressed air buffer 13, in which the moulding air is brought to the desired temperature, and through the valve 12 to the cavities 11. The warm air presses the warm film web part lying in the mould against the wall of the mould cavities 14 in the lower mould half 10.

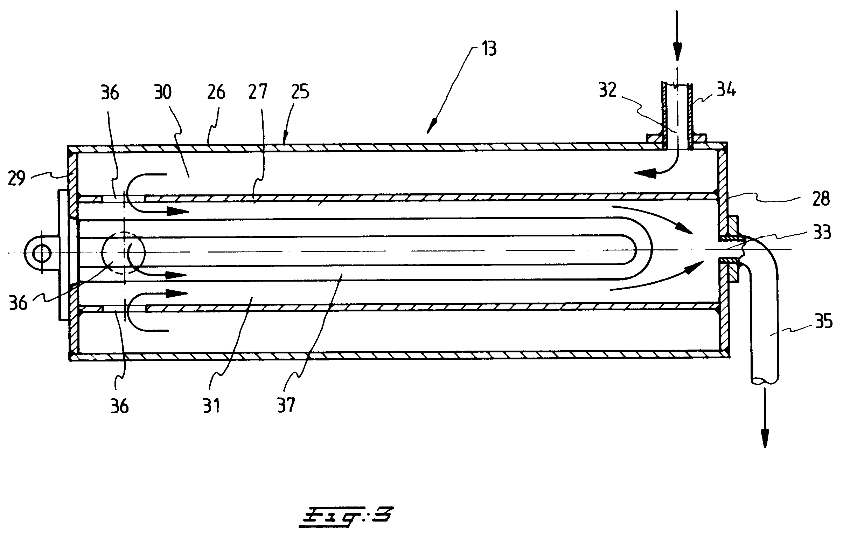

The lower mould half 10 is provided with cooling channels 16 (see also Fig. 2) through which cooling medium flows for cooling the mould half 10 and the wall of the moulded objects lying against the wall of the mould cavities 14.

In order to prevent a heated film web part from being subjected to external temperature influences during its conveyance between the second and the third station, which could cause the temperature of the film web part to change and could lead to the moulding of the film web part to the objects being less controllable, shielding means 17 are disposed between the second station 2 and third station 3.

Measures are also taken in the third station 3 to prevent a film web part from being cooled down directly beside the mould by the colder mould parts. For this, a face of at least one of the mould halves 9, 10 facing a film web part placed in the mould, at the side where a film web part is fed into the mould, in the region directly beside the clamping edges 15, is provided with the heating element 18 (see Fig. 2) which is insulated relative to the mould half. In Fig. 2 the insulation between the heating element 18 and the mould half 10 is indicated by the reference number 19.

In the first three stations 1 to 3 the film web 5 is supported at the underside by supporting wires 20 which run in the direction of movement of the film web and move along with the film web 5. These supporting wires 20 are necessary to support a heated film web part, which is extremely limp, and to prevent the film web part from deforming prematurely. The supporting wires are preferably endless wires running over reversing rollers 21 and 22. In the third station 3 the supporting wires 20 can run through grooves recessed in the mould halves 9 and 10 of the mould 8, which means that the supporting wires are not in the way when the mould is closing. The supporting wires are preferably made of a plastic or a plastic-coated metal. The plastic of the supporting wires 20 has a considerably higher processing temperature than the film supported by the wires. The supporting wires can be particularly advantageously made of an aramide®.

In the fourth station 4 the moulded objects are, finally, separated from the remainder of the film web 5. This can be carried out in a conventional manner, for example by rolling up the remainder of the film web, as a result of which the much more rigid objects tear off along wall weaknesses produced during the moulding. The moulded objects, one of which is shown in Fig. 1, indicated by the reference number 23, can be collected in a collection container 24.

It is, however, also possible to separate objects from the film web during or immediately after opening of the mould and to discharge them, for example by a directed jet of air.

The remainder of the film web, which for the present process must be regarded as waste, can be re-used for making objects.

Fig. 3 shows a possible embodiment of a compressed air buffer in longitudinal section.

The compressed air buffer 13 shown comprises a double-walled tube 25 which is formed by an outer tube 26 and an inner tube 27. The tube 25 is shut off at both ends by a first end wall 28 and a second end wall 29. A first space 30 is thus bounded between the outer tube 26 and the inner tube 27, and a second space 31 is bounded inside the inner tube 27. Near the first end wall 28, the compressed air buffer 13 is provided with an air supply aperture 32 made in the outer tube 26 and opening out in the first space 30. An air discharge aperture 33, opening out in the second space 31, is provided in the first end wall 28. Air lines 34, 35 are connected to the two apertures 32, 33 respectively, the line 35 leading to the mould. Near the end wall 29, the inner tube 27 is provided with apertures 36, by means of which the first space 30 and the second space 31 are in communication with each other. A heating element 37 is provided inside the inner tube 27 for heating the compressed air present in the compressed air buffer 13, and used for deformation of the film, the temperature of the heating element being considerably higher than the desired temperature of the air.

## Claims

1. Method for manufacturing objects from a web of thermoplastic material, in which a film web is heated to a specific desired deformation temperature, in a cooled mould the objects are moulded through deformation of the heated film web part and are also cooled, and the moulded and cooled objects are removed from the film web part, **characterised in that** in a first phase the film web part is heated at both sides over its entire width, is then heated through in a subsequent, second phase, in such a way that the film web part reaches the same temperature over the entire thickness, width and length, which temperature is slightly lower than the desired deformation temperature, and thereafter, in a third phase, the objects are formed from the heated film web part in the cooled mould by means of a moulding medium under raised pressure at a temperature which is above the deformation temperature.

2. Method according to claim 1, **characterised in that** in the third phase the film web part around the objects to be moulded is clamped between cooled clamping elements, and the moulding medium presses the film web part against a cooled mould part.

3. Method according to claim 1 or 2, **characterised in that** the moulding medium used is air which is brought to the desired temperature by conveying said air in a compressed state along an element with a considerably higher temperature than the desired temperature of the air.

4. Method according to one of the preceding claims, **characterised in that** at least the heated film web part is shielded from external temperature influences between the second and third phase.

5. Method according to claim 4, **characterised in that** the heated film web part, at the feed side of the film web, is kept warm directly beside the clamping elements between which the film web part is clamped in the third phase.

6. Method according to one of claims 1 - 5, **characterised in that** the film web part is supported already in the first phase by supporting wires moving along with the film web.

7. Method for manufacturing thin-walled lids from a flat web of a polyalkene film, using the measures according to one or more of claims 1 - 6.

8. Method according to claim 7, **characterised in that** the lids are made of a web of polypropylene film which is preferably 0.3 - 0.4 mm thick.

9. Device for carrying out the method according to one or more of claims 1 - 8, at least comprising a first station (1) for heating a film web part (5a) lying therein, which first station is provided with heating means (7), a second station (2) for heating through a film web part heated in the first station, and a third station (3) for moulding the objects, which third station (3) comprises a mould (8) made up of two mould halves (9) and (10) which can be moved up to and away from each other, and between which a heated film web part can be placed, one mould half (9) being provided with at least one cavity (11) which is connected by means of a shut-off valve (12) to a compressed air buffer (13) in which a heating element (37) is accommodated, while the other mould half (10) is provided with at least one mould cavity (14) for an object to be moulded and has a surface which faces a film web part placed in the mould and can be cooled.

10. Device according to claim 9, **characterised in that** the mould (8) is provided with a clamping edge or clamping edges (15) to be cooled, for clamping a film web part placed in the mould beside the mould cavity or mould cavities (14).

11. Device according to claim 9 or 10, **characterised in that** shielding means (17) are provided between the second station (2) and third station (3) for shielding a heated film web part moving from the second to the third station from external temperature influences.

12. Device according to one of claims 9 - 11, **characterised in that** a face of at least one of the mould halves (9, 10) facing a film web part placed in the mould (8), at the side where a film web part is fed into the mould, in the region directly beside the clamping edges (15), is provided with a heating element (18) which is insulated relative to the mould half.

13. Device according to one of claims 9 - 12, **characterised in that** the compressed air buffer (13) comprises a double-walled tube (25) which is formed by an outer tube (26) and an inner tube (27) and is shut off at both ends by a first end wall (28) and a second end wall (29), as a result of which a first space (30) is bounded between the outer tube and the inner tube, and a second space (31) is bounded inside the inner tube, while in the region of the first end wall (28) the compressed air buffer is provided with an air supply aperture (32) opening out in the first space (30) and an air discharge aperture (33) opening out in the second space (31), and near the second end wall (29) the inner tube (27) is provided with at least one third aperture (36) by means of which the first and second space are in communication with each other, and in that heating means (37) are provided inside the inner tube (27).

14. Device according to one of claims 9 - 13, **characterised in that** it is provided with supporting wires (20) running through the first station (1), second station (2) and third station (3) in the film web direction, for supporting the film web.

15. Device according to claim 14, **characterised in that** the supporting wires (20) are endless wires running over reversing rollers (18, 19) and made of plastic or plastic-coated metal, said plastic having a processing temperature which is higher than that of the material of the film web.

16. Device according to claim 15, **characterised in that** the plastic of the supporting wires (20) is an aramide®.
